# EUROPEAN PATENT APPLICATION

(11) **EP 4 621 984 A1**
(43) Date of publication of application: **24.09.2025**
(21) Application number: 24783966.5
(22) Date of filing: 31.01.2024
(51) Int. Cl.: H01M 50/645

(54) **BATTERY CELL, BATTERY AND ELECTRIC DEVICE**

(30) Priority: 03.04.2023 CN 202310347085
(71) Applicant: Contemporary Amperex Technology Co., Limited, Fujian 352100 (CN)
(72) Inventor: CHEN, Shengwang, Ningde, Fujian 352100 (CN); GUO, Zhijun, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/074999
(87) International publication number: WO 2024/207881

(57) **Abstract**

The present application discloses a battery cell, a battery, and an electric apparatus. The battery cell includes a housing, an electrode terminal, a first sealing member, and a second sealing member. The housing includes a wall portion, the wall portion having an outlet hole. The electrode terminal is inserted into the outlet hole along the axial direction of the electrode terminal, the electrode terminal having a first recessed portion and a liquid injection hole connected along the axial direction, and the liquid injection hole being located at the bottom of the first recessed portion. In the radial direction of the electrode terminal, the radial dimension of the liquid injection hole is smaller than the radial dimension of the first recessed portion. The first recessed portion communicates with the interior of the housing via the liquid injection hole. The first sealing member is at least partially disposed within the first recessed portion and is configured to seal the liquid injection hole. The second sealing member is at least partially inserted into the first recessed portion along the axial direction and is configured to seal the first recessed portion, the second sealing member pressing against the first sealing member. Through the above configuration, the sealing effect on the liquid injection hole can be improved.

## Description

### TECHNICAL FIELD

The present application relates to the field of battery technology, and more particularly, to a battery cell, a battery, and an electric apparatus.

### BACKGROUND TECHNOLOGY

With the development of battery technology, battery cells are applied in an increasing number of fields and are gradually replacing traditional petrochemical energy in the field of automotive power. Battery cells can store chemical energy and controllably convert chemical energy into electrical energy. In recyclable battery cells, after discharge, active materials can be activated through charging for continued use.

Battery cells often include an electrode assembly, an electrode terminal, a housing, and a sealing member, where the housing can accommodate the electrode assembly. The electrode assembly is electrically connected to the outside through the electrode terminal. The electrode terminal can be provided with a liquid injection hole for injecting an electrolyte into the housing. The sealing member can be configured to seal the liquid injection hole. In the structure of existing battery cells, the structure and function of the sealing member for sealing the liquid injection hole are relatively simple, and the sealing effect on the liquid injection hole still needs improvement.

### SUMMARY

In view of the above issues, the present application provides a battery cell, a battery, and an electric apparatus capable of improving the sealing effect on the liquid injection hole.

According to a first aspect, the present application provides a battery cell, where the battery cell includes a housing, an electrode terminal, a first sealing member, and a second sealing member. The housing includes a wall portion, where the wall portion has an outlet hole. The electrode terminal is inserted into the outlet hole along an axial direction of the electrode terminal, where the electrode terminal has a first recessed portion and a liquid injection hole connected along the axial direction, the liquid injection hole is located at the bottom of the first recessed portion, a radial dimension of the liquid injection hole is smaller than a radial dimension of the first recessed portion in a radial direction of the electrode terminal, and the first recessed portion communicates with the interior of the housing via the liquid injection hole. The first sealing member is at least partially disposed in the first recessed portion and configured to seal the liquid injection hole. The second sealing member is at least partially inserted into the first recessed portion along the axial direction and configured to seal the first recessed portion, where the second sealing member presses and holds the first sealing member.

Through the above manner, pressing and holding the first sealing member by the second sealing member facilitates improving the sealing effect of the first sealing member on the liquid injection hole and reducing the risk of electrolyte leakage.

In some embodiments, the first sealing member includes a body portion, where the body portion is disposed in the first recessed portion and covers the liquid injection hole, and the second sealing member surrounds the liquid injection hole to press and hold the body portion against the bottom of the first recessed portion.

Through the above manner, utilizing the pressing action of the second sealing member, the body portion forms an annular sealing zone around the periphery of the liquid injection hole, facilitating improvement of the sealing effect of the first sealing member on the liquid injection hole.

In some embodiments, the body portion is an elastomer, and a ratio of a compression amount of the body portion in a state pressed and held by the second sealing member to a thickness of the body portion in a natural state is greater than or equal to 0.1 and less than or equal to 0.5 in the axial direction.

Through the above manner, maintaining good elasticity of the body portion is facilitated, while formation of a good seal around the periphery of the liquid injection hole by the body portion is also facilitated.

In some embodiments, an end face of the second sealing member facing the body portion is provided with a second recessed portion and an annular pressing surface surrounding the second recessed portion, where a projection of the annular pressing surface along the axial direction at least partially surrounds a periphery of the liquid injection hole, and the second sealing member presses and holds the body portion through the annular pressing surface.

Through the above manner, reducing a pressing area of the second sealing member on the body portion is enabled, thereby facilitating effective formation of the annular sealing zone by the second sealing member with a relatively small pressing force.

In some embodiments, a projection of the annular pressing surface along the axial direction is entirely located at the periphery of the liquid injection hole.

Through the above manner, effective formation of the annular sealing zone by the second sealing member with a relatively small pressing force is facilitated, while unnecessary deformation of the body portion directly above the liquid injection hole is alleviated.

In some embodiments, the bottom of the second recessed portion and the annular pressing surface have a height difference in the axial direction, where the height difference is greater than a compression amount of the body portion in a state pressed and held by the second sealing member.

Through the above manner, forming a gap between the bottom of the second recessed portion and the body portion when the second sealing member presses and holds the body portion is enabled, reducing the pressing force of the second sealing member on the body portion.

In some embodiments, a difference between the height difference and the compression amount is greater than or equal to 0.05 mm.

Through the above manner, effectively forming a gap between the bottom of the second recessed portion and the body portion and providing sufficient assembly redundancy are enabled.

In some embodiments, a radial dimension of an outer ring edge of the annular pressing surface is greater than or equal to a radial dimension of an outer peripheral surface of the body portion in the radial direction.

Through the above manner, enabling the annular pressing surface to act on the outer peripheral surface of the body portion enhances the sealing effect, while providing radial expansion space for the body portion when the body portion is pressed and held, facilitating sufficient compression of the body portion.

In some embodiments, a difference between a radial dimension of an inner ring edge of the annular pressing surface and a radial dimension of an outer peripheral surface of the body portion is greater than or equal to 1 mm in the radial direction.

Through the above manner, maintaining a sufficient pressing area between the second sealing member and the body portion is enabled, thereby enhancing the sealing effect.

In some embodiments, a side of the body portion facing away from the liquid injection hole is provided with a third recessed portion, where a projection of the third recessed portion along the axial direction falls within the liquid injection hole.

Through the above manner, enabling a liquid injection needle to determine a position of the liquid injection hole by visually locating the third recessed portion is implemented, thereby improving efficiency and accuracy of liquid injection by the liquid injection needle.

In some embodiments, a side of the body portion facing away from the liquid injection hole is provided with a protruding portion located at a periphery of the third recessed portion, an inner end face of the second sealing member facing the body portion is further provided with a fourth recessed portion located at the bottom of the second recessed portion, and the fourth recessed portion is configured to avoid the protruding portion.

Through the above manner, reducing a contact area of the first sealing member on the side of the body portion facing away from the liquid injection hole with another first sealing member during a loading stage of the first sealing member in an assembly process is enabled, thereby reducing occurrence of adhesion between first sealing members and facilitating improvement of assembly efficiency.

In some embodiments, the first sealing member further includes an insertion portion, where one end of the insertion portion is connected to the body portion and inserted into the liquid injection hole.

Through the above manner, sealing the liquid injection hole by the first sealing member is enabled, reducing a risk of electrolyte leakage from the liquid injection hole within the housing.

In some embodiments, the insertion portion is an elastomer, and an outer peripheral surface of the insertion portion and a wall of the liquid injection hole are sealed to each other in a tight fit manner.

Through the above manner, improving a sealing effect of the insertion portion on the liquid injection hole while enhancing assembly efficiency of the first sealing member is enabled.

In some embodiments, a difference between a radial dimension of an outer peripheral surface of the insertion portion in a natural state and the radial dimension of the liquid injection hole is greater than or equal to 0.2 mm and less than or equal to 0.8 mm in the radial direction.

Through the above manner, enabling the insertion portion to exert sufficient elastic force on the wall of the liquid injection hole after compression to form a good seal between the insertion portion and the wall of the liquid injection hole is facilitated, while smooth insertion of the insertion portion into the liquid injection hole during assembly is also facilitated.

In some embodiments, the first sealing member further includes a locking portion, where the locking portion is connected to an opposite end of the insertion portion away from the body portion, an outer peripheral surface of the locking portion protrudes beyond an outer peripheral surface of the insertion portion in the radial direction, and the locking portion is configured to abut a side of the electrode terminal facing the interior of the housing when the insertion portion is inserted into the liquid injection hole.

Through the above manner, hindering movement of the first sealing member in a direction away from the interior of the housing by the locking portion is enabled, facilitating improvement of connection stability between the first sealing member and the electrode terminal before the second sealing member presses and holds the first sealing member.

In some embodiments, the insertion portion and the locking portion are elastomers, and in a natural state, a difference between a maximum radial dimension of the outer peripheral surface of the locking portion and a radial dimension of an outer peripheral surface of the insertion portion is greater than or equal to 0.1 mm.

Through the above manner, enhancing a locking strength between the locking portion and the electrode terminal is facilitated, effectively hindering movement of the first sealing member in a direction away from the interior of the housing.

In some embodiments, a thickness of the locking portion is greater than or equal to 0.5 mm in the axial direction.

Through the above manner, enhancing a locking strength between the locking portion and the electrode terminal is facilitated, effectively hindering movement of the first sealing member in a direction away from the interior of the housing.

In some embodiments, an end of the locking portion away from the insertion portion is provided with a guide surface, where the guide surface is configured to guide the locking portion through the liquid injection hole.

Through the above manner, facilitating smooth entry of the locking portion into the liquid injection hole during assembly is enabled, thereby improving assembly efficiency.

In some embodiments, on a reference cross-section set along the axial direction, an inclination angle of the guide surface relative to the axial direction is greater than or equal to 30° and less than or equal to 60°.

Through the above manner, facilitating smooth entry of the locking portion into the liquid injection hole during assembly is enabled, while enhancing a locking strength between the locking portion and the electrode terminal is also facilitated.

In some embodiments, the battery cell further includes a current collecting disc and an electrode assembly disposed inside the housing, where the current collecting disc is configured to connect a tab of the electrode assembly and the electrode terminal, and a region of the electrode terminal corresponding to the bottom of the first recessed portion is welded to the current collecting disc.

Through the above manner, facilitating electrical connection between the electrode terminal and the electrode assembly is enabled. Utilizing a feature of a thinner thickness at the bottom of the first recessed portion for welding with the current collecting disc facilitates achieving electrical connection between the electrode terminal and the current collecting disc from a side of the electrode terminal away from the current collecting disc.

In some embodiments, the housing includes a shell and an end cap, where one end of the shell has an opening, the end cap covers the opening, the shell includes a side wall and a bottom wall, the side wall surrounds an outer side of the electrode assembly, the bottom wall is disposed opposite to the opening, and the wall portion is the end cap or the bottom wall.

Through the above manner, improving assembly efficiency of the battery cell is enabled.

According to a second aspect, the present application provides a battery, where the battery includes the battery cell described above.

According to a third aspect, the present application provides an electric apparatus, where the electric apparatus includes the battery described above.

The above description is only an overview of the technical solutions of the present application. To enable a clearer understanding of the technical means of the present application and implementation according to the contents of the specification, and to make the above and other objectives, features, and advantages of the present application more apparent and understandable, specific embodiments of the present application are provided below.

### DESCRIPTION OF DRAWINGS

By reading the detailed description of the preferred embodiments below, various other advantages and benefits will become clear to those skilled in the art. The drawings are only for the purpose of illustrating the preferred embodiments and are not considered a limitation to the present application. Throughout the drawings, identical components are denoted by identical reference signs. In the drawings:
FIG. 1 shows a structural schematic diagram of a vehicle according to one or more embodiments;
FIG. 2 shows an exploded structural schematic diagram of a battery according to one or more embodiments;
FIG. 3 shows a top structural schematic diagram of a battery cell according to one or more embodiments;
FIG. 4 shows a cross-sectional structural schematic diagram of the battery cell shown in FIG. 3 along a C-C section;
FIG. 5 shows a structural schematic diagram of part A of the battery cell shown in FIG. 4;
FIG. 6 shows a schematic diagram of part B of the battery cell shown in FIG. 5;
FIG. 7 shows a schematic diagram of part D of the battery cell shown in FIG. 5;
FIG. 8 shows a structural change schematic diagram of a first sealing member during an assembly process; and
FIG. 9 shows a structural schematic diagram of a second sealing member.

Reference signs in the description of embodiments are as follows:
1000a vehicle;
100a battery; 200a controller; 300a motor;
10a box; 11a first part; 12a second part;
H1 thickness of the body portion in a natural state; H2 height difference; H3 compression amount; H4 thickness of the locking portion; D1 radial dimension of an outer ring edge of the annular pressing surface; D2 radial dimension of an outer peripheral surface of the body portion; D3 radial dimension of an inner ring edge of the annular pressing surface; D4 radial dimension of the liquid injection hole; D5 radial dimension of an outer peripheral surface of the insertion portion in a natural state; D6 maximum radial dimension of an outer peripheral surface of the locking portion; D7 radial dimension of the first recessed portion; α angle between two line segments of the guide surface on a reference cross-section set along the axial direction and the axial direction;
1 battery cell; 100 housing; 101 wall portion; 102 outlet hole; 110 shell; 111 opening; 112 side wall; 113 bottom wall; 120 end cap; 200 electrode terminal; 210 first recessed portion; 220 liquid injection hole; 300 first sealing member; 310 body portion; 311 third recessed portion; 312 protruding portion; 320 insertion portion; 330 locking portion; 331 guide surface; 400 second sealing member; 410 second recessed portion; 420 annular pressing surface; 430 fourth recessed portion; 500 electrode assembly; 501 tab; and 600 current collecting disc.

### DESCRIPTION OF EMBODIMENTS

Embodiments of the technical solutions of the present application will be described in detail below with reference to the drawings. The following embodiments are only used to illustrate the technical solutions of the present application more clearly and thus serve as examples, not to limit the scope of protection of the present application.

Unless otherwise defined, all technical and scientific terms used herein have the same meanings as commonly understood by those skilled in the technical field of the present application; terms used herein are for the purpose of describing specific embodiments only and are not intended to limit the present application; terms "include" and "have" and any variations thereof in the specification, claims, and the above description of drawings of the present application are intended to cover non-exclusive inclusion.

In the description of embodiments of the present application, technical terms "first" and "second" are used only to distinguish different objects and should not be understood as indicating or implying relative importance or implicitly indicating the number, specific order, or primary-secondary relationship of the indicated technical features. In the description of embodiments of the present application, "plurality" means two or more, unless explicitly and specifically defined otherwise.

Reference herein to "embodiment" means that a particular feature, structure, or characteristic described in connection with the embodiment may be included in at least one embodiment of the present application. Appearance of this phrase in various places in the specification does not necessarily refer to the same embodiment, nor is it an independent or alternative embodiment mutually exclusive with other embodiments. Those skilled in the art explicitly and implicitly understand that embodiments described herein may be combined with other embodiments.

In the description of embodiments of the present application, the term "and/or" merely describes an association relationship between associated objects, indicating that three relationships may exist, for example, A and/or B may indicate: A exists alone, A and B exist simultaneously, and B exists alone. Additionally, the character "/" herein generally indicates an "or" relationship between the associated objects before and after.

In the description of embodiments of the present application, the term "plurality" refers to two or more (including two); similarly, "multiple groups" refers to two or more groups (including two groups), and "multiple pieces" refers to two or more pieces (including two pieces).

In the description of embodiments of the present application, technical terms "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," "circumferential," and similar terms indicating orientation or positional relationships are based on the orientation or positional relationships shown in the drawings, solely for the convenience of describing embodiments of the present application and simplifying the description, and do not indicate or imply that the referred device or element must have a specific orientation, be constructed, and operated in a specific orientation, and thus should not be construed as limiting the embodiments of the present application.

In the description of embodiments of the present application, unless explicitly specified and defined otherwise, technical terms "install," "connect," "connection," "fix," and similar terms should be understood in a broad sense, for example, as a fixed connection, a detachable connection, or an integral formation; a mechanical connection or an electrical connection; a direct connection or an indirect connection through an intermediary; or an internal communication between two elements or an interaction relationship between two elements. Those skilled in the art can understand the specific meanings of the above terms in the embodiments of the present application based on specific circumstances.

With the development of battery technology, battery cells are applied in an increasing number of fields and are gradually replacing traditional fossil energy in the field of automotive power. Battery cells can store chemical energy and controllably convert chemical energy into electrical energy. In recyclable battery cells, after discharge, active materials can be activated through charging for continued use.

A battery cell often includes an electrode assembly, an electrode terminal, a housing, and a sealing member, where the housing can accommodate the electrode assembly. The electrode assembly is electrically connected to the outside through the electrode terminal. The electrode terminal can be provided with a liquid injection hole for injecting electrolyte into the housing. The sealing member can be configured to seal the liquid injection hole. In the structure of existing battery cells, the structure and function of the sealing member for sealing the liquid injection hole are relatively simple, and the sealing effect on the liquid injection hole still needs improvement.

To improve the sealing effect on the liquid injection hole, a first sealing member and a second sealing member may be provided. The housing includes a wall portion, where the wall portion has an outlet hole. The electrode terminal is inserted into the outlet hole along an axial direction of the electrode terminal, where the electrode terminal has a first recessed portion and a liquid injection hole connected along the axial direction, the liquid injection hole is located at the bottom of the first recessed portion, a radial dimension of the liquid injection hole is smaller than a radial dimension of the first recessed portion in a radial direction of the electrode terminal, and the first recessed portion communicates with the interior of the housing via the liquid injection hole. The first sealing member is at least partially disposed in the first recessed portion and configured to seal the liquid injection hole. The second sealing member is at least partially inserted into the first recessed portion along the axial direction and configured to seal the first recessed portion, where the second sealing member presses and holds the first sealing member.

Based on the above considerations, the present application provides a battery cell, a battery, and an electric apparatus. Sealing the first recessed portion by the second sealing member provides protection to the first sealing member, reducing a risk of the sealing of the liquid injection hole by the first sealing member being damaged by an external environment. Additionally, sealing the first recessed portion by the second sealing member also reduces a risk of electrolyte leakage. Pressing and holding the first sealing member by the second sealing member enables formation of a seal between the first sealing member and both the second sealing member and the electrode terminal, and also hinders the first sealing member from slipping out of the outlet hole toward the second sealing member, further reducing the risk of electrolyte leakage. Thus, the sealing effect on the liquid injection hole is improved.

The battery cell, battery, and electric apparatus disclosed in embodiments of the present application can be used in electric apparatuses using a battery as a power source or in various energy storage systems using a battery as an energy storage element. Electric apparatuses may include, but are not limited to, mobile phones, tablets, laptops, electric toys, electric tools, electric bicycles, electric vehicles, ships, spacecraft, and similar devices. Electric toys may include fixed or mobile electric toys, such as game consoles, electric car toys, electric ship toys, and electric airplane toys, while spacecraft may include airplanes, rockets, space shuttles, and spaceships.

For convenience of description, the following embodiments take an electric apparatus as a vehicle 1000a according to an embodiment of the present application as an example.

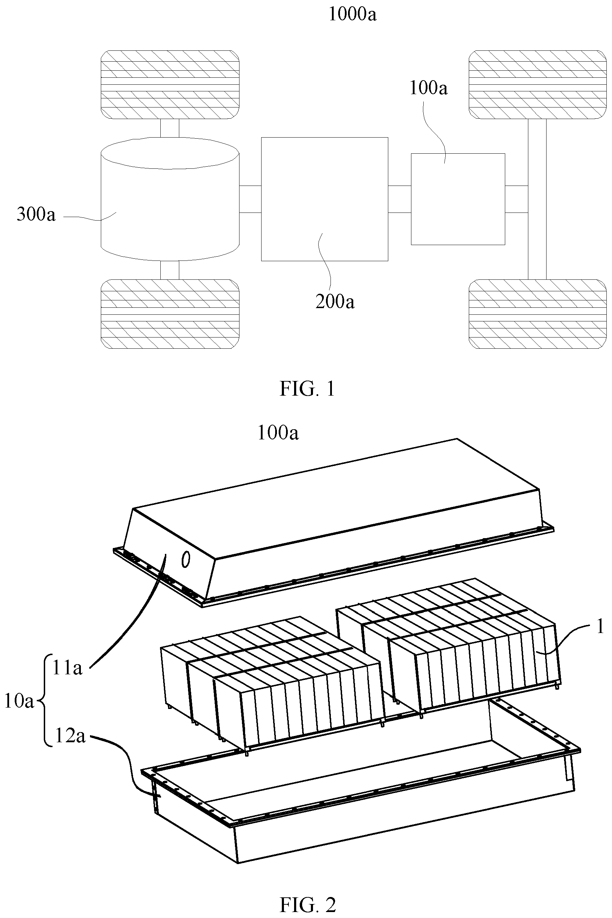

Referring to FIG. 1, a vehicle 1000a may be a fuel vehicle, a gas vehicle, or a new energy vehicle, where the new energy vehicle may be a pure electric vehicle, a hybrid vehicle, or an extended-range vehicle. A battery 100a is disposed inside the vehicle 1000a, where the battery 100a may be disposed at the bottom, head, or tail of the vehicle 1000a. The battery 100a may be used for powering the vehicle 1000a, for example, the battery 100a may serve as an operational power source for the vehicle 1000a. The vehicle 1000a may further include a controller 200a and a motor 300a, where the controller 200a is configured to control the battery 100a to supply power to the motor 300a, for example, for operational power demands during starting, navigation, and driving of the vehicle 1000a.

In some embodiments of the present application, the battery 100a may not only serve as an operational power source for the vehicle 1000a but also as a driving power source for the vehicle 1000a, replacing or partially replacing fuel or natural gas to provide driving power for the vehicle 1000a.

In some embodiments, the battery 100a may be an energy storage device. Energy storage devices include energy storage containers, energy storage cabinets, and similar devices.

The battery 100a mentioned in embodiments of the present application refers to a single physical module including one or more battery cells 1 to provide higher voltage and capacity.

In embodiments of the present application, a battery cell 1 may be a secondary battery, where a secondary battery refers to a battery cell that can be charged after discharge to activate active materials for continued use. Each battery cell 1 may also be a primary battery.

The battery cell 1 includes, but is not limited to, lithium-ion batteries, sodium-ion batteries, sodium-lithium-ion batteries, lithium metal batteries, sodium metal batteries, lithium-sulfur batteries, magnesium-ion batteries, nickel-hydrogen batteries, nickel-cadmium batteries, lead-acid batteries, and similar types. The battery cell 1 may be cylindrical, flat, cuboidal, or in other shapes.

In some embodiments, the battery 100a may be a battery module, and when there are multiple battery cells 1, the multiple battery cells 1 are arranged and fixed to form a battery module.

In some embodiments, referring to FIG. 2, the battery 100a may be a battery pack, where the battery pack includes a box 10a and the battery cell 1, and the battery cell 1 or a battery module is accommodated in the box 10a.

In some embodiments, the box 10a may serve as a part of a chassis structure of the vehicle 1000a. For example, a portion of the box 10a may form at least a part of a floor of the vehicle 1000a, or a portion of the box 10a may form at least a part of cross beams and longitudinal beams of the vehicle 1000a.

Referring to FIG. 2, the battery 100a includes the box 10a and the battery cell 1, where the battery cell 1 is accommodated in the box 10a. The box 10a is configured to provide an accommodating space for the battery cell 1, and the box 10a may adopt various structures. In some embodiments, the box 10a may include a first part 11a and a second part 12a, where the first part 11a and the second part 12a cover each other, and the first part 11a and the second part 12a together define an accommodating space for accommodating the battery cell 1. The second part 12a may be a hollow structure with an opening at one end, the first part 11a may be a plate-like structure, and the first part 11a covers an opening side of the second part 12a, so that the first part 11a and the second part 12a together define the accommodating space; the first part 11a and the second part 12a may also both be hollow structures with an opening on one side, where an opening side of the first part 11a covers an opening side of the second part 12a. Of course, the box 10a formed by the first part 11a and the second part 12a may have various shapes, such as a cylinder, a cuboid, and similar shapes.

In the battery 100a, there may be multiple battery cells 1, where the multiple battery cells 1 may be connected in series, in parallel, or in a mixed manner, with a mixed manner referring to a combination of both series and parallel connections among the multiple battery cells 1. The multiple battery cells 1 may be directly connected in series, in parallel, or in a mixed manner, and then an entirety formed by the multiple battery cells 1 is accommodated in the box 10a; alternatively, the battery 100a may have multiple battery cells 1 first connected in series, in parallel, or in a mixed manner to form a battery module, and then multiple battery modules are connected in series, in parallel, or in a mixed manner to form an entirety accommodated in the box 10a. The battery 100a may further include other structures, for example, the battery 100a may further include a busbar component configured to achieve electrical connection between the multiple battery cells 1.

Each battery cell 1 may be a secondary battery or a primary battery; and may also be a lithium-sulfur battery, a sodium-ion battery, or a magnesium-ion battery, but is not limited thereto. The battery cell 1 may be cylindrical, flat, cuboidal, or in other shapes.

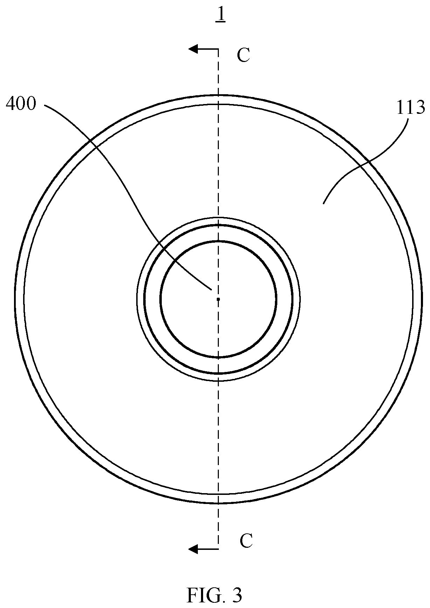

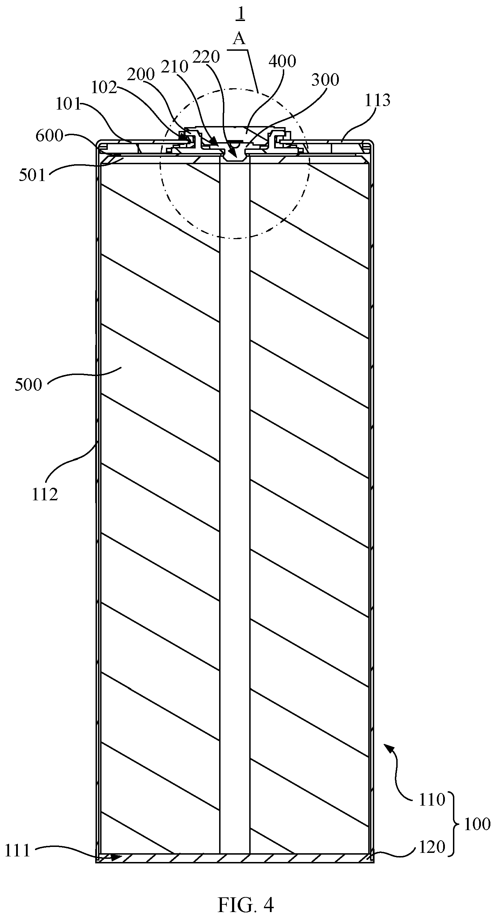

Referring to FIG. 3 and FIG. 4, the battery cell 1 refers to a smallest unit constituting a battery. In this embodiment, a cylindrical battery cell 1 is taken as an example for description. As shown in FIG. 4, the battery cell 1 includes a housing 100, an electrode assembly 500, and other functional components.

In some embodiments, the housing 100 is configured to encapsulate the electrode assembly 500, electrolyte, and other components. The housing 100 may be a steel shell, an aluminum shell, a plastic shell (such as polypropylene), a composite metal shell (such as a copper-aluminum composite shell), or an aluminum-plastic film.

The housing 100 may include an end cap 120 and a shell 110. The end cap 120 refers to a component that covers an opening 111 of the shell 110 to isolate an internal environment of the battery cell 1 from an external environment. Without limitation, a shape of the end cap 120 may be adapted to a shape of the shell 110 to fit the shell 110. Optionally, the end cap 120 may be made of a material with certain hardness and strength (such as an aluminum alloy), so that the end cap 120 is less likely to deform when subjected to extrusion or collision, enabling the battery cell 1 to have higher structural strength and improved safety performance. The end cap 120 may be provided with functional components such as an electrode terminal 200. The electrode terminal 200 may be configured to electrically connect with the electrode assembly 500 for outputting or inputting electrical energy of the battery cell 1. In some embodiments, the end cap 120 may further be provided with a pressure relief mechanism configured to release internal pressure when an internal pressure or temperature of the battery cell 1 reaches a threshold. A material of the end cap 120 may also be various, such as including, but not limited to, copper, iron, aluminum, stainless steel, aluminum alloy, plastic, and similar materials. In some embodiments, an insulating member may further be provided on an inner side of the end cap 120, where the insulating member may be configured to isolate electrical connection components within the shell 110 from the end cap 120 to reduce a risk of short circuits. For example, the insulating member may be plastic, rubber, or similar materials.

The shell 110 is a component configured to cooperate with the end cap 120 to form an internal environment of the battery cell 1, where the formed internal environment can accommodate the electrode assembly 500, electrolyte, and other components. The shell 110 and the end cap 120 may be independent components, where the opening 111 may be provided on the shell 110, and the end cap 120 covers the opening 111 at the opening 111 to form the internal environment of the battery cell 1. Without limitation, the end cap 120 and the shell 110 may also be integrated; specifically, the end cap 120 and the shell 110 may form a common connection surface before other components are placed into the shell, and when encapsulation of the interior of the shell 110 is required, the end cap 120 covers the shell 110. The shell 110 may have various shapes and sizes, such as cuboidal, cylindrical, hexagonal prism, and similar shapes. Specifically, a shape of the shell 110 may be determined based on a specific shape and size of the electrode assembly 500. A material of the shell 110 may be various, such as including, but not limited to, copper, iron, aluminum, stainless steel, aluminum alloy, plastic, and similar materials.

The electrode assembly 500 is a component in the battery cell 1 where an electrochemical reaction occurs. The shell 110 may contain one or more electrode assemblies 500.

In some embodiments, the electrode assembly 500 includes a positive electrode, a negative electrode, and a separator. During charging and discharging of the battery cell 1, active ions (such as lithium ions) intercalate and deintercalate back and forth between the positive electrode and the negative electrode. The separator is disposed between the positive electrode and the negative electrode, capable of preventing a short circuit between the positive and negative electrodes while allowing active ions to pass through.

In some embodiments, the positive electrode may be a positive electrode plate, where the positive electrode plate may include a positive electrode current collector and a positive electrode active material disposed on at least one surface of the positive electrode current collector.

For example, the positive electrode current collector has two surfaces opposite in a thickness direction thereof, and the positive electrode active material is disposed on either or both of the two opposite surfaces of the positive electrode current collector.

For example, the positive electrode current collector may adopt a metal foil or a composite current collector. For instance, as a metal foil, silver-surface-treated aluminum or stainless steel, stainless steel, copper, aluminum, nickel, carbon electrode, carbon, nickel, or titanium may be used. The composite current collector may include a polymer material base layer and a metal layer. The composite current collector may be formed by forming a metal material (aluminum, aluminum alloy, nickel, nickel alloy, titanium, titanium alloy, silver, silver alloy, and similar materials) on a polymer material substrate (such as a substrate of polypropylene, polyethylene terephthalate, polybutylene terephthalate, polystyrene, polyethylene, and similar materials).

For example, the positive electrode active material may include at least one of the following materials: lithium-containing phosphates, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium-containing phosphates may include, but are not limited to, at least one of lithium iron phosphate (such as LiFePO₄ (also abbreviated as LFP)), a composite of lithium iron phosphate and carbon, lithium manganese phosphate (such as LiMnPO₄), a composite of lithium manganese phosphate and carbon, lithium iron manganese phosphate, and a composite of lithium iron manganese phosphate and carbon. Examples of lithium transition metal oxides may include, but are not limited to, at least one of lithium cobalt oxide (such as LiCoO₂), lithium nickel oxide (such as LiNiO₂), lithium manganese oxide (such as LiMnO₂, LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (such as LiNi_{0.85}Co_{0.15}Al_{0.05}O₂), and their modified compounds.

In some embodiments, the negative electrode may be a negative electrode plate, where the negative electrode plate may include a negative electrode current collector.

For example, the negative electrode current collector may adopt a metal foil, a foam metal, or a composite current collector. For instance, as a metal foil, silver-surface-treated aluminum or stainless steel, stainless steel, copper, aluminum, nickel, carbon electrode, carbon, nickel, or titanium may be used. Foam metal may be foam nickel, foam copper, foam aluminum, foam alloy, or foam carbon. The composite current collector may include a polymer material base layer and a metal layer. The composite current collector may be formed by forming a metal material (copper, copper alloy, nickel, nickel alloy, titanium, titanium alloy, silver, silver alloy, and similar materials) on a polymer material substrate (such as a substrate of polypropylene, polyethylene terephthalate, polybutylene terephthalate, polystyrene, polyethylene, and similar materials).

For example, the negative electrode plate may include a negative electrode current collector and a negative electrode active material disposed on at least one surface of the negative electrode current collector.

For example, the negative electrode current collector has two surfaces opposite in a thickness direction thereof, and the negative electrode active material is disposed on either or both of the two opposite surfaces of the negative electrode current collector.

For example, the negative electrode active material may adopt negative electrode active materials known in the art for battery cells. For instance, the negative electrode active material may include at least one of the following materials: artificial graphite, natural graphite, soft carbon, hard carbon, silicon-based materials, tin-based materials, and lithium titanate. Silicon-based materials may be selected from at least one of elemental silicon, silicon oxide compounds, silicon-carbon composites, silicon-nitrogen composites, and silicon alloys. Tin-based materials may be selected from at least one of elemental tin, tin oxide compounds, and tin alloys. However, the present application is not limited to these materials, and other conventional materials that can be used as negative electrode active materials for batteries may also be used. These negative electrode active materials may be used alone or in combination of two or more.

In some embodiments, a material of the positive electrode current collector may be aluminum, and a material of the negative electrode current collector may be copper.

In some embodiments, the electrode assembly 500 further includes a separator, where the separator is disposed between the positive electrode and the negative electrode.

In some embodiments, the separator is a separator film. The present application has no particular limitation on a type of the separator film, and any well-known porous structure separator film with good chemical stability and mechanical stability may be selected.

For example, a main material of the separator film may be selected from at least one of glass fiber, non-woven fabric, polyethylene, polypropylene, polyvinylidene fluoride, and ceramic. The separator film may be a single-layer film or a multilayer composite film, without particular limitation. When the separator film is a multilayer composite film, materials of the layers may be the same or different, without particular limitation. The separator may be a single component located between the positive and negative electrodes or may be attached to surfaces of the positive and negative electrodes.

In some embodiments, the separator is a solid-state electrolyte. The solid-state electrolyte is disposed between the positive electrode and the negative electrode, simultaneously conducting ions and isolating the positive and negative electrodes.

In some embodiments, the battery cell further includes an electrolyte, where the electrolyte conducts ions between the positive and negative electrodes. The present application has no specific limitation on a type of the electrolyte, which may be selected according to needs. The electrolyte may be liquid, gel, or solid.

Liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be selected from ether solvents. Ether solvents may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

Gel electrolyte includes a polymer as a skeleton network of the electrolyte, paired with an ionic liquid-lithium salt.

Solid-state electrolyte includes a polymer solid-state electrolyte, an inorganic solid-state electrolyte, and a composite solid-state electrolyte.

For example, the polymer solid-state electrolyte may be polyether (polyethylene oxide), polysiloxane, polycarbonate, polyacrylonitrile, polyvinylidene fluoride, polymethyl methacrylate, a single-ion polymer, a polyionic liquid-lithium salt, cellulose, or similar materials.

For example, the inorganic solid-state electrolyte may be one or more of an oxide solid electrolyte (crystalline perovskite, sodium superionic conductor, garnet, amorphous LiPON thin film), a sulfide solid electrolyte (crystalline lithium superionic conductor (lithium germanium phosphorus sulfur, argyrodite), amorphous sulfide), a halide solid electrolyte, a nitride solid electrolyte, and a hydride solid electrolyte.

For example, the composite solid-state electrolyte is formed by adding an inorganic solid-state electrolyte filler to a polymer solid-state electrolyte.

In some embodiments, the electrode assembly 500 is a wound structure. The positive electrode plate and the negative electrode plate are wound into a wound structure.

In some embodiments, the electrode assembly 500 is provided with a tab 501, where the tab 501 can conduct current out of the electrode assembly 500. The tab includes a positive tab and a negative tab. The positive tab and the negative tab may be located together at one end of a main body or separately at two ends of the main body. During charging and discharging of the battery 100a, the positive electrode active material and the negative electrode active material react with the electrolyte, and the tab 501 connects to the electrode terminal to form a current loop.

According to some embodiments of the present application, as shown in FIG. 4 to FIG. 6, the battery cell 1 described in embodiments of the present application includes a housing 100, an electrode terminal 200, a first sealing member 300, and a second sealing member 400. The housing 100 includes a wall portion 101, where the wall portion 101 has an outlet hole 102. The electrode terminal 200 is inserted into the outlet hole 102 along an axial direction of the electrode terminal 200, where the electrode terminal 200 has a first recessed portion 210 and a liquid injection hole 220 connected along the axial direction, the liquid injection hole 220 is located at the bottom of the first recessed portion 210, a radial dimension D4 of the liquid injection hole 220 is smaller than a radial dimension D7 of the first recessed portion 210 in a radial direction of the electrode terminal 200, and the first recessed portion 210 communicates with the interior of the housing 100 via the liquid injection hole 220. The first sealing member 300 is at least partially disposed in the first recessed portion 210 and configured to seal the liquid injection hole 220. The second sealing member 400 is at least partially inserted into the first recessed portion 210 along the axial direction and configured to seal the first recessed portion 210, where the second sealing member 400 presses and holds the first sealing member 300.

The axial direction of the electrode terminal 200 refers to a direction of spacing between an end of the electrode terminal 200 facing the interior of the housing 100 and an end facing away from the interior of the housing 100, while the radial direction of the electrode terminal 200 refers to a direction perpendicular to the axial direction of the electrode terminal 200. Unless otherwise specified, the axial and radial directions mentioned below refer to the axial and radial directions of the electrode terminal 200.

By being inserted into the outlet hole 102 along the axial direction, the electrode terminal 200 can be mounted to the housing 100. Specifically, one end of the electrode terminal 200 is disposed toward the interior of the housing 100 and can be configured to electrically connect with an electrode assembly 500 disposed within the housing 100. Another end of the electrode terminal 200 is disposed toward an exterior of the housing 100 and can be connected to the outside, thereby enabling charging and discharging of the electrode assembly 500.

During an assembly process of the battery cell 1, when injecting electrolyte, the electrolyte can sequentially pass through the first recessed portion 210 and the liquid injection hole 220 and then enter the interior of the housing 100. Setting radial dimension D7 of the first recessed portion 210 to be larger than radial dimension D4 of the liquid injection hole 220 facilitates injection of electrolyte into the interior of the housing 100 by external equipment through the first recessed portion 210. Setting radial dimension D4 of the liquid injection hole 220 to be smaller than radial dimension D7 of the first recessed portion 210 facilitates sealing the liquid injection hole 220 by the first sealing member 300 after completion of electrolyte injection, reducing a risk of electrolyte leakage.

Sealing the first recessed portion 210 by the second sealing member 400 provides protection to the first sealing member 300, reducing a risk of the sealing of the liquid injection hole 220 by the first sealing member 300 being damaged by an external environment. Additionally, sealing the first recessed portion 210 by the second sealing member 400 also reduces a risk of electrolyte leakage.

Pressing and holding the first sealing member 300 by the second sealing member 400 enables formation of a seal between the first sealing member 300 and both the second sealing member 400 and the electrode terminal 200, and also hinders the first sealing member 300 from slipping out of the outlet hole 102 toward the second sealing member 400, further reducing the risk of electrolyte leakage.

Optionally, two ends of the liquid injection hole 220 along the axial direction may respectively communicate with the first recessed portion 210 and the interior of the housing 100.

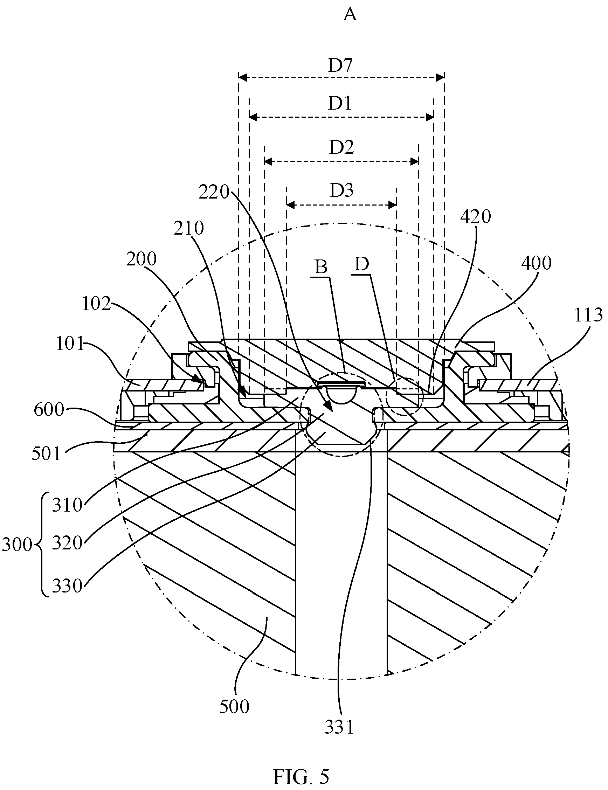

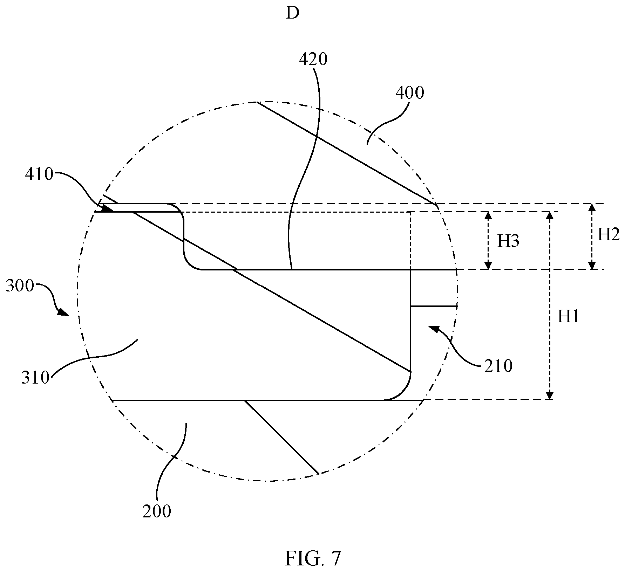

According to some embodiments of the present application, optionally, as shown in FIG. 5 and FIG. 7, the first sealing member 300 includes a body portion 310, where the body portion 310 is disposed in the first recessed portion 210 and covers the liquid injection hole 220, and the second sealing member 400 surrounds the liquid injection hole 220 to press and hold the body portion 310 against the bottom of the first recessed portion 210.

As shown in FIG. 5 to FIG. 7, radial dimension D2 of the body portion 310 may be larger than radial dimension D4 of the liquid injection hole 220. When the body portion 310 is projected along the axial direction toward the liquid injection hole 220, a projection of the body portion 310 may partially fall on a periphery of the liquid injection hole 220, so that the body portion 310 will not be pressed into the interior of the housing 100 through the liquid injection hole 220 by the second sealing member 400.

Utilizing a pressing action of the second sealing member 400, the body portion 310 forms an annular sealing zone around the periphery of the liquid injection hole 220, facilitating improvement of the sealing effect of the first sealing member 300 on the liquid injection hole 220. Specifically, under the pressing action of the second sealing member 400, the body portion 310 abuts between the second sealing member 400 and the periphery of the liquid injection hole 220, enabling formation of a seal between the body portion 310 and both the second sealing member 400 and the periphery of the liquid injection hole 220, thereby effectively alleviating electrolyte leakage.

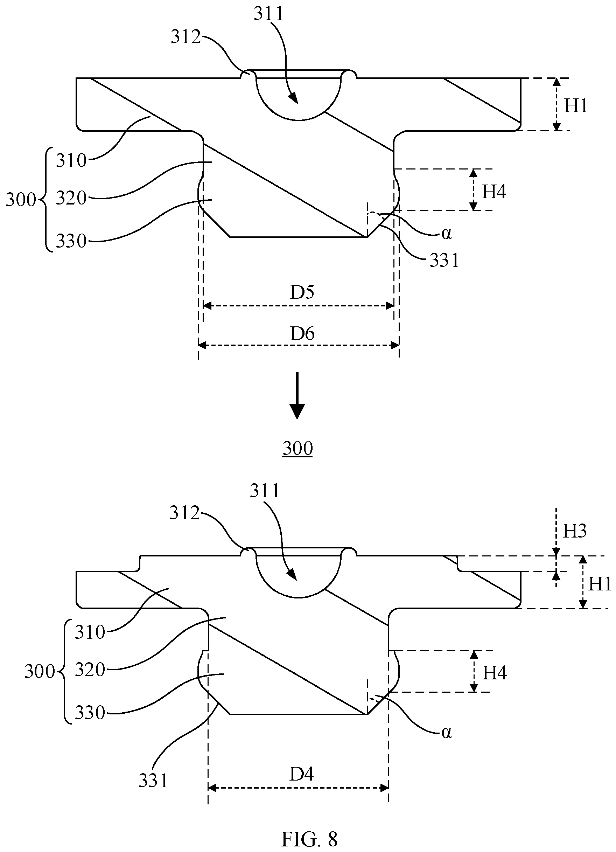

According to some embodiments of the present application, optionally, as shown in FIG. 7 and FIG. 8, the body portion 310 is an elastomer, and a ratio of compression amount H3 of the body portion 310 in a state pressed and held by the second sealing member 400 to thickness H1 of the body portion 310 in a natural state is greater than or equal to 0.1 and less than or equal to 0.5 in the axial direction. For example, H3/H1 may be set to 0.15, 0.2, 0.3, 0.4, and similar values.

After being compressed within an elastic limit, the body portion 310 tends to elastically recover, enabling sealing abutment with the first sealing member 300 and the periphery of the liquid injection hole 220 through elastic force. The greater compression amount H3 of the body portion 310 within the elastic limit, the greater the elastic force of the body portion 310, and the better the sealing effect between the body portion 310 and the first sealing member 300 and the periphery of the liquid injection hole 220. In the axial direction, setting the ratio of compression amount H3 of the body portion 310 in a state pressed and held by the second sealing member 400 to thickness H1 of the body portion 310 in a natural state to be greater than or equal to 0.1 facilitates formation of a good seal between the body portion 310 and both the second sealing member 400 and the periphery of the liquid injection hole 220.

If the body portion 310 is compressed beyond the elastic limit, elasticity of the body portion 310 may be damaged, adversely affecting the sealing effect. In the axial direction, setting the ratio of compression amount H3 of the body portion 310 in a state pressed and held by the second sealing member 400 to thickness H1 of the body portion 310 in a natural state to be less than or equal to 0.5 reduces a risk of compression amount H3 of the body portion 310 exceeding the elastic limit, facilitating maintenance of good elasticity of the body portion 310 and achieving a good sealing effect.

The second sealing member 400 exerts a pressing force on the first sealing member 300, and correspondingly, the first sealing member 300 exerts an elastic force on the second sealing member 400, causing the second sealing member 400 to tend to move away from the electrode terminal 200. The second sealing member 400 may form a connection with the electrode terminal 200 to maintain pressing and holding of the first sealing member 300. When compression amount H3 of the body portion 310 is greater than 0.5, the elastic force of the body portion 310 may adversely affect the connection between the second sealing member 400 and the electrode terminal 200.

Further, the body portion 310 is an elastic polymer material, such as silicone, rubber, and similar materials.

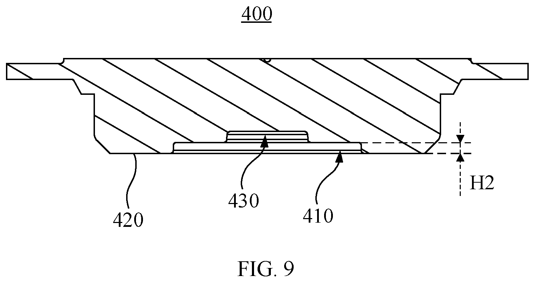

According to some embodiments of the present application, optionally, as shown in FIG. 5 and FIG. 9, an end face of the second sealing member 400 facing the body portion 310 is provided with a second recessed portion 410 and an annular pressing surface 420 surrounding the second recessed portion 410, where a projection of the annular pressing surface 420 along the axial direction at least partially surrounds a periphery of the liquid injection hole 220, and the second sealing member 400 presses and holds the body portion 310 through the annular pressing surface 420.

By providing the second recessed portion 410, the end face of the second sealing member 400 facing the body portion 310 can form the annular pressing surface 420. Forming the annular pressing surface 420 reduces a pressing area of the second sealing member 400 on the body portion 310, thereby reducing a pressing force of the second sealing member 400 on the body portion 310, facilitating effective formation of the annular sealing zone by the second sealing member 400 with a relatively small pressing force.

Setting the projection of the annular pressing surface 420 along the axial direction to be at least partially located at the periphery of the liquid injection hole 220 enables the annular pressing surface 420 to effectively press and hold the body portion 310.

According to some embodiments of the present application, optionally, as shown in FIG. 5, a projection of the annular pressing surface 420 along the axial direction is entirely located at the periphery of the liquid injection hole 220.

Radial dimension D3 of an inner ring edge of the annular pressing surface 420 may be larger than radial dimension D4 of the liquid injection hole 220. This reduces a width of the annular pressing surface 420 in the radial direction, thereby reducing a pressing area of the second sealing member 400 on the body portion 310, reducing a pressing force of the second sealing member 400 on the body portion 310, and facilitating effective formation of the annular sealing zone by the second sealing member 400 with a relatively small pressing force, while alleviating unnecessary deformation of the body portion 310 directly above the liquid injection hole 220.

According to some embodiments of the present application, optionally, as shown in FIG. 7, the bottom of the second recessed portion 410 and the annular pressing surface 420 have a height difference H2 in the axial direction, where the height difference H2 is greater than a compression amount H3 of the body portion 310 in a state pressed and held by the second sealing member 400.

Setting the height difference H2 to be greater than compression amount H3 enables formation of a gap between the bottom of the second recessed portion 410 and the body portion 310 when the first sealing member 300 presses and holds the body portion 310, reducing a pressing force of the second sealing member 400 on the body portion 310 and providing assembly redundancy.

According to some embodiments of the present application, optionally, as shown in FIG. 7, a difference between the height difference H2 and compression amount H3 is greater than or equal to 0.05 mm. For example, H2-H3 may be set to 0.1 mm, 0.2 mm, 0.3 mm, 0.5 mm, 0.8 mm, 1 mm, and similar values.

Setting the difference between the height difference H2 and compression amount H3 to be greater than or equal to 0.05 mm effectively forms a gap between the bottom of the second recessed portion 410 and the body portion 310 and provides sufficient assembly redundancy.

According to some embodiments of the present application, optionally, as shown in FIG. 5, a radial dimension D1 of an outer ring edge of the annular pressing surface 420 is greater than or equal to a radial dimension D2 of an outer peripheral surface of the body portion 310 in the radial direction.

In the radial direction, setting the radial dimension D1 of the outer ring edge of the annular pressing surface 420 to be greater than or equal to the radial dimension D2 of the outer peripheral surface of the body portion 310 enables the annular pressing surface 420 to act on the outer peripheral surface of the body portion 310, enhancing the sealing effect, while providing radial expansion space for the body portion 310 when the body portion 310 is pressed and held, facilitating sufficient compression of the body portion 310.

According to some embodiments of the present application, optionally, as shown in FIG. 5, a difference between a radial dimension D3 of an inner ring edge of the annular pressing surface 420 and a radial dimension D2 of an outer peripheral surface of the body portion 310 is greater than or equal to 1 mm in the radial direction. For example, D2-D3 may be set to 1.5 mm, 2 mm, 3 mm, and similar values.

In the radial direction, setting the difference between the radial dimension D3 of the inner ring edge of the annular pressing surface 420 and the radial dimension D2 of the outer peripheral surface of the body portion 310 to be greater than or equal to 1 mm enables maintenance of a sufficient pressing area between the second sealing member 400 and the body portion 310, thereby enhancing the sealing effect between the body portion 310 and the second sealing member 400 and the electrode terminal 200.

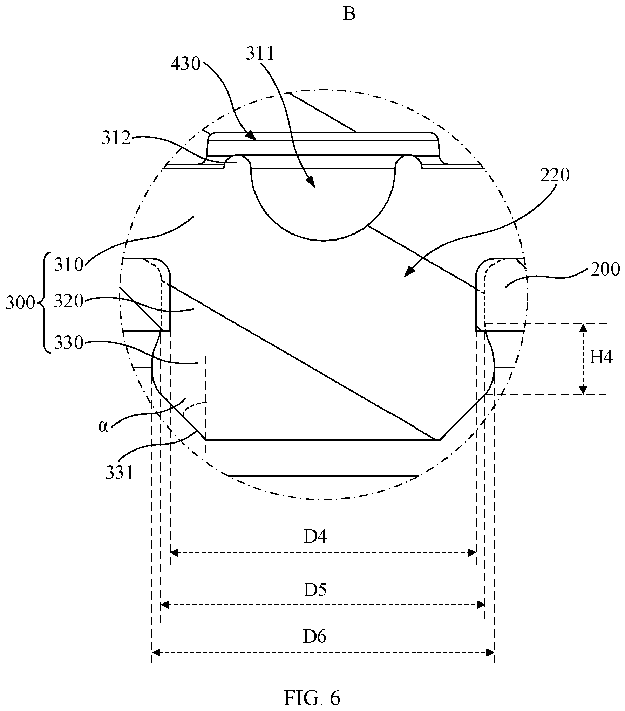

According to some embodiments of the present application, optionally, as shown in FIG. 6, a side of the body portion 310 facing away from the liquid injection hole 220 is provided with a third recessed portion 311, where a projection of the third recessed portion 311 along the axial direction falls within the liquid injection hole 220.

During an assembly process of the battery cell 1, after the first sealing member 300 seals the liquid injection hole 220, a liquid injection needle may penetrate the first sealing member 300 to inject electrolyte into the interior of the housing 100. Providing the third recessed portion 311 with a projection along the axial direction falling within the liquid injection hole 220 enables a liquid injection needle to determine a position of the liquid injection hole 220 by visually locating the third recessed portion 311, thereby improving efficiency and accuracy of liquid injection by the liquid injection needle.

During liquid injection, the liquid injection needle may first visually locate the third recessed portion 311, then penetrate the first sealing member 300 along the axial direction from the bottom of the third recessed portion 311, allowing the liquid injection needle to inject electrolyte into the interior of the housing 100 through the liquid injection hole 220. Additionally, providing the third recessed portion 311 reduces a distance penetrated by the injection needle, facilitating penetration of the first sealing member 300 by the injection needle.

According to some embodiments of the present application, optionally, as shown in FIG. 5 and FIG. 6, the side of the body portion 310 facing away from the liquid injection hole 220 is provided with a protruding portion 312 located at a periphery of the third recessed portion 311, an inner end face of the second sealing member 400 facing the body portion 310 is further provided with a fourth recessed portion 430 located at the bottom of the second recessed portion 410, and the fourth recessed portion 430 is configured to avoid the protruding portion 312.

Multiple first sealing members 300 are prone to adhesion after contact, and a larger contact area between first sealing members 300 increases the likelihood of adhesion. Providing the protruding portion 312 reduces a contact area of each first sealing member 300 on a side of the body portion 310 facing away from the liquid injection hole 220 with other first sealing members 300 during a loading stage of the first sealing member 300 in an assembly process, thereby reducing occurrence of adhesion between multiple first sealing members 300, facilitating improvement of assembly efficiency, and reducing defects caused by adhesion of first sealing members 300 during the assembly process.

According to some embodiments of the present application, optionally, as shown in FIG. 6, the first sealing member 300 further includes an insertion portion 320, where one end of the insertion portion 320 is connected to the body portion 310 and inserted into the liquid injection hole 220.

Inserting the insertion portion 320 into the liquid injection hole 220 enables the first sealing member 300 to seal the liquid injection hole 220, reducing a risk of electrolyte leakage from the liquid injection hole 220 within the housing 100.

According to some embodiments of the present application, optionally, as shown in FIG. 6, the insertion portion 320 is an elastomer, and an outer peripheral surface of the insertion portion 320 and a wall of the liquid injection hole 220 is sealed to each other in a tight fit manner.

Radial dimension of the insertion portion 320 may be larger than radial dimension D4 of the liquid injection hole 220. When the insertion portion 320 is inserted into the liquid injection hole 220, the insertion portion 320 is compressed and tends to elastically recover, enabling abutment against the wall of the liquid injection hole 220 through elastic force, forming a seal between the insertion portion 320 and the wall of the liquid injection hole 220 in a tight fit manner.

Such an arrangement improves a sealing effect of the insertion portion 320 on the liquid injection hole 220 while enhancing assembly efficiency of the first sealing member 300.

According to some embodiments of the present application, optionally, as shown in FIG. 6, a difference between a radial dimension D5 of an outer peripheral surface of the insertion portion 320 in a natural state and the radial dimension D4 of the liquid injection hole 220 is greater than or equal to 0.2 mm and less than or equal to 0.8 mm in the radial direction. For example, D5-D4 may be set to 0.25 mm, 0.3 mm, 0.5 mm, 0.6 mm, and similar values.

In the radial direction, setting the difference between the radial dimension D5 of the outer peripheral surface of the insertion portion 320 in a natural state and radial dimension D4 of the liquid injection hole 220 to be greater than or equal to 0.2 mm enables the insertion portion 320 to abut the wall of the liquid injection hole 220 after compression and exert sufficient elastic force on the wall of the liquid injection hole 220, forming a good seal between the insertion portion 320 and the wall of the liquid injection hole 220.

In the radial direction, setting the difference between the radial dimension D5 of the outer peripheral surface of the insertion portion 320 in a natural state and radial dimension D4 of the liquid injection hole 220 to be less than or equal to 0.8 mm enables the insertion portion 320 to be easily compressed and deformed to be insertable into the liquid injection hole 220, facilitating smooth insertion of the insertion portion 320 into the liquid injection hole 220 during assembly and improving assembly efficiency.

According to some embodiments of the present application, optionally, as shown in FIG. 5 and FIG. 6, the first sealing member 300 further includes a locking portion 330, where the locking portion 330 is connected to an opposite end of the insertion portion 320 away from the body portion 310, an outer peripheral surface of the locking portion 330 protrudes beyond an outer peripheral surface of the insertion portion 320 in the radial direction, and the locking portion 330 is configured to abut a side of the electrode terminal 200 facing the interior of the housing 100 when the insertion portion 320 is inserted into the liquid injection hole 220.

A maximum radial dimension D6 of the outer peripheral surface of the locking portion 330 may be larger than radial dimension D5 of the outer peripheral surface of the insertion portion 320. Providing the locking portion 330 hinders movement of the first sealing member 300 in a direction away from the interior of the housing 100, facilitating improvement of connection stability between the first sealing member 300 and the electrode terminal 200 before the second sealing member 400 presses and holds the first sealing member 300.

According to some embodiments of the present application, optionally, as shown in FIG. 6, the insertion portion 320 and the locking portion 330 are elastomers, and a difference between a maximum radial dimension D6 of the outer peripheral surface of the locking portion 330 and a radial dimension D5 of the outer peripheral surface of the insertion portion 320 is greater than or equal to 0.1 mm. For example, D6-D5 may be set to 0.15 mm, 0.2 mm, 0.3 mm, 0.5 mm, and similar values.

Setting the difference between the maximum radial dimension D6 of the outer peripheral surface of the locking portion 330 and the radial dimension D5 of the outer peripheral surface of the insertion portion 320 to be greater than or equal to 0.1 mm ensures that a radial dimension of the locking portion 330 after a certain degree of compression remains larger than the radial dimension D4 of the liquid injection hole 220, enhancing a locking strength between the locking portion 330 and the electrode terminal 200, effectively hindering movement of the first sealing member 300 in a direction away from the interior of the housing 100.

According to some embodiments of the present application, optionally, as shown in FIG. 6, a thickness H4 of the locking portion 330 is greater than or equal to 0.5 mm in the axial direction. For example, H4 may be set to 0.6 mm, 0.7 mm, 0.8 mm, 1 mm, 2 mm, and similar values.

In the axial direction, a smaller thickness H4 of the locking portion 330 makes the locking portion 330 more prone to deformation under force to a radial dimension smaller than radial dimension D4 of the liquid injection hole 220. In the axial direction, setting the thickness H4 of the locking portion 330 to be greater than or equal to 0.5 mm ensures that a radial dimension of the locking portion 330 after compression remains larger than the radial dimension D4 of the liquid injection hole 220, enhancing a locking strength between the locking portion 330 and the electrode terminal 200, and effectively hindering movement of the first sealing member 300 in a direction away from the interior of the housing 100.

According to some embodiments of the present application, optionally, as shown in FIG. 6, an end of the locking portion 330 away from the insertion portion 320 is provided with a guide surface 331, where the guide surface 331 is configured to guide the locking portion 330 through the liquid injection hole 220.

Providing the guide surface 331 facilitates smooth entry of the locking portion 330 into the liquid injection hole 220 during assembly, thereby improving assembly efficiency.

Further, a shape of the guide surface 331 is a part of a conical surface. A radial dimension of an end of the guide surface 331 that first enters the liquid injection hole 220 is smaller than the radial dimension D4 of the liquid injection hole 220, facilitating smooth entry of the locking portion 330 into the liquid injection hole 220 during assembly.

According to some embodiments of the present application, optionally, as shown in FIG. 6, on a reference cross-section set along the axial direction, an inclination angle α of the guide surface 331 relative to the axial direction is greater than or equal to 30° and less than or equal to 60°. For example, the guide surface 331 relative to the axial direction may be set to 35°, 40°, 45°, 50°, and similar values.

On a reference cross-section set along the axial direction, the guide surface 331 may be represented as two line segments. Angle α between the two line segments of the guide surface 331 on the reference cross-section set along the axial direction and the axial direction is greater than or equal to 30° and less than or equal to 60°. For example, the reference cross-section may be the C-C section shown in FIG. 3.

Setting the inclination angle α of the guide surface 331 relative to the axial direction to be greater than or equal to 30° ensures a sufficient size difference between two ends of the guide surface 331, facilitating smooth entry of the locking portion 330 into the liquid injection hole 220 during assembly.

Setting the inclination angle α of the guide surface 331 relative to the axial direction to be less than or equal to 60° ensures that a size difference between two ends of the guide surface 331 is within an acceptable range, enabling the guide surface 331 to support the locking portion 330, reducing a degree of force-induced deformation of the locking portion 330, thereby effectively hindering movement of the first sealing member 300 in a direction away from the interior of the housing 100.

According to some embodiments of the present application, optionally, as shown in FIG. 4 and FIG. 5, the battery cell 1 further includes a current collecting disc 600 and an electrode assembly 500 disposed inside the housing 100, where the current collecting disc 600 is configured to connect a tab 501 of the electrode assembly 500 and the electrode terminal 200, and a region of the electrode terminal 200 corresponding to the bottom of the first recessed portion 210 is welded to the current collecting disc 600.

The current collecting disc 600 may be disposed between the electrode terminal 200 and the electrode assembly 500, serving to form an electrical current path between the electrode terminal 200 and the electrode assembly 500. Providing the current collecting disc 600 facilitates electrical connection between the electrode terminal 200 and the electrode assembly 500. Utilizing a feature of a thinner thickness at the bottom of the first recessed portion 210 for welding with the current collecting disc 600 facilitates achieving electrical connection between the electrode terminal 200 and the current collecting disc 600 from a side of the electrode terminal 200 away from the current collecting disc 600.

According to some embodiments of the present application, optionally, as shown in FIG. 4 and FIG. 5, the housing 100 includes a shell 110 and an end cap 120, where one end of the shell 110 has an opening 111, the end cap 120 covers the opening 111, the shell 110 includes a side wall 112 and a bottom wall 113, the side wall 112 surrounds an outer side of the electrode assembly 500, the bottom wall 113 is disposed opposite to the opening 111, and the wall portion 101 is the end cap 120 or the bottom wall 113.

In the above embodiments, the wall portion 101 is the bottom wall 113. In other embodiments, the wall portion 101 may also be the end cap 120.

Since the end cap 120 or the bottom wall 113 is flatter compared to the side wall 112, disposing the electrode terminal 200, the first sealing member 300, and the second sealing member 400 on the end cap 120 or the bottom wall 113 improves assembly efficiency of the battery cell 1.

According to some embodiments of the present application, optionally, as shown in FIG. 3 to FIG. 9, the battery cell 1 includes a housing 100, an electrode terminal 200, a first sealing member 300, and a second sealing member 400. The housing 100 includes a wall portion 101, where the wall portion 101 has an outlet hole 102. The electrode terminal 200 is inserted into the outlet hole 102 along an axial direction of the electrode terminal 200, where the electrode terminal 200 has a first recessed portion 210 and a liquid injection hole 220 connected along the axial direction, the liquid injection hole 220 is located at the bottom of the first recessed portion 210, a radial dimension D4 of the liquid injection hole 220 is smaller than a radial dimension D7 of the first recessed portion 210 in the radial direction of the electrode terminal 200, and the first recessed portion 210 communicates with the interior of the housing 100 via the liquid injection hole 220. The first sealing member 300 is at least partially disposed in the first recessed portion 210 and configured to seal the liquid injection hole 220. The second sealing member 400 is at least partially inserted into the first recessed portion 210 along the axial direction and configured to seal the first recessed portion 210, where the second sealing member 400 presses and holds the first sealing member 300. The first sealing member 300 includes a body portion 310, where the body portion 310 is disposed in the first recessed portion 210 and covers the liquid injection hole 220, and the second sealing member 400 surrounds the liquid injection hole 220 to press and hold the body portion 310 against the bottom of the first recessed portion 210. The body portion 310 is an elastomer, and in the axial direction, a ratio of compression amount H3 of the body portion 310 in a state pressed and held by the second sealing member 400 to thickness H1 of the body portion 310 in a natural state is greater than or equal to 0.1 and less than or equal to 0.5. An end face of the second sealing member 400 facing the body portion 310 is provided with a second recessed portion 410 and an annular pressing surface 420 surrounding the second recessed portion 410, where a projection of the annular pressing surface 420 along the axial direction at least partially surrounds a periphery of the liquid injection hole 220, and the second sealing member 400 presses and holds the body portion 310 through the annular pressing surface 420. A projection of the annular pressing surface 420 along the axial direction is entirely located at the periphery of the liquid injection hole 220. In the axial direction, the bottom of the second recessed portion 410 and the annular pressing surface 420 have a height difference H2, where the height difference H2 is greater than compression amount H3 of the body portion 310 in a state pressed and held by the second sealing member 400. A difference between the height difference H2 and compression amount H3 is greater than or equal to 0.05 mm. In the radial direction, a radial dimension D1 of an outer ring edge of the annular pressing surface 420 is greater than or equal to a radial dimension D2 of an outer peripheral surface of the body portion 310. In the radial direction, a difference between a radial dimension D3 of an inner ring edge of the annular pressing surface 420 and the radial dimension D2 of an outer peripheral surface of the body portion 310 is greater than or equal to 1 mm. A side of the body portion 310 facing away from the liquid injection hole 220 is provided with a third recessed portion 311, where a projection of the third recessed portion 311 along the axial direction falls within the liquid injection hole 220. A side of the body portion 310 facing away from the liquid injection hole 220 is provided with a protruding portion 312 located at a periphery of the third recessed portion 311, an inner end face of the second sealing member 400 facing the body portion 310 is further provided with a fourth recessed portion 430 located at the bottom of the second recessed portion 410, and the fourth recessed portion 430 is configured to avoid the protruding portion 312. The first sealing member 300 further includes an insertion portion 320, where one end of the insertion portion 320 is connected to the body portion 310 and inserted into the liquid injection hole 220. The insertion portion 320 is an elastomer, and an outer peripheral surface of the insertion portion 320 and a wall of the liquid injection hole 220 are sealed to each other in a tight fit manner. In the radial direction, a difference between a radial dimension D5 of an outer peripheral surface of the insertion portion 320 in a natural state and a radial dimension D4 of the liquid injection hole 220 is greater than or equal to 0.2 mm and less than or equal to 0.8 mm. The first sealing member 300 further includes a locking portion 330, where the locking portion 330 is connected to an opposite end of the insertion portion 320 away from the body portion 310, an outer peripheral surface of the locking portion 330 protrudes beyond an outer peripheral surface of the insertion portion 320 in the radial direction, and the locking portion 330 is configured to abut a side of the electrode terminal 200 facing the interior of the housing 100 when the insertion portion 320 is inserted into the liquid injection hole 220. The insertion portion 320 and the locking portion 330 are elastomers, and in a natural state, a difference between a maximum radial dimension D6 of an outer peripheral surface of the locking portion 330 and radial dimension D5 of an outer peripheral surface of the insertion portion 320 is greater than or equal to 0.1 mm. In the axial direction, a thickness H4 of the locking portion 330 is greater than or equal to 0.5 mm. An end of the locking portion 330 away from the insertion portion 320 is provided with a guide surface 331, where the guide surface 331 is configured to guide the locking portion 330 through the liquid injection hole 220. On a reference cross-section set along the axial direction, an inclination angle α of the guide surface 331 relative to the axial direction is greater than or equal to 30° and less than or equal to 60°. The battery cell 1 further includes a current collecting disc 600 and an electrode assembly 500 disposed inside the housing 100, where the current collecting disc 600 is configured to connect a tab 501 of the electrode assembly 500 and the electrode terminal 200, and a region of the electrode terminal 200 corresponding to the bottom of the first recessed portion 210 is welded to the current collecting disc 600. The housing 100 includes a shell 110 and an end cap 120, where one end of the shell 110 has an opening 111, the end cap 120 covers the opening 111, the shell 110 includes a side wall 112 and a bottom wall 113, the side wall 112 surrounds an outer side of the electrode assembly 500, the bottom wall 113 is disposed opposite to the opening 111, and the wall portion 101 is the end cap 120 or the bottom wall 113.

According to some embodiments of the present application, as shown in FIG. 2, the battery 100a includes the battery cell 1 described above. Such an arrangement improves stability and reliability of the battery cell 1 during operation by enhancing the sealing effect on the liquid injection hole 220, thereby improving stability and reliability of the battery 100a during operation.

According to some embodiments of the present application, as shown in FIG. 1, the electric apparatus includes the battery 100a described above. Such an arrangement improves stability and reliability of the battery 100a during operation by enhancing stability and reliability of the battery cell 1 during operation, thereby improving stability and reliability of the electric apparatus during operation.

In summary, embodiments of the present application enable formation of a seal between the first sealing member 300 and both the second sealing member 400 and the electrode terminal 200 by pressing and holding the first sealing member 300 with the second sealing member 400, and also hinder the first sealing member 300 from slipping out of the outlet hole 102 toward the second sealing member 400, thereby improving the sealing effect on the liquid injection hole 220 and reducing a risk of electrolyte leakage.

Finally, the above embodiments are only used to illustrate the technical solutions of the present application and not to limit them; although the present application has been described in detail with reference to the foregoing embodiments, those skilled in the art should understand that modifications may still be made to the technical solutions described in the foregoing embodiments, or equivalent replacements may be made to some or all of the technical features; these modifications or replacements do not cause the essence of the corresponding technical solutions to depart from the scope of the technical solutions of the embodiments of the present application, and they should all be encompassed within the scope of the claims and specification of the present application. In particular, as long as there is no structural conflict, various technical features mentioned in the embodiments may be combined in any manner. The present application is not limited to the specific embodiments disclosed herein but includes all technical solutions falling within the scope of the claims.

## Claims

1. A battery cell **characterized by** comprising:
a housing, the housing comprising a wall portion, and the wall portion having an outlet hole;
an electrode terminal, the electrode terminal being inserted into the outlet hole along an axial direction of the electrode terminal, the electrode terminal having a first recessed portion and a liquid injection hole connected along the axial direction, the liquid injection hole being located at the bottom of the first recessed portion, a radial dimension of the liquid injection hole being smaller than a radial dimension of the first recessed portion in a radial direction of the electrode terminal, and the first recessed portion communicating with the interior of the housing via the liquid injection hole;
a first sealing member, the first sealing member being at least partially disposed in the first recessed portion and configured to seal the liquid injection hole; and
a second sealing member, the second sealing member being at least partially inserted into the first recessed portion along the axial direction and configured to seal the first recessed portion, wherein the second sealing member presses and holds the first sealing member.

2. The battery cell according to claim 1, **characterized in that** the first sealing member comprises a body portion, the body portion being disposed in the first recessed portion and covering the liquid injection hole, and the second sealing member surrounding the liquid injection hole to press and hold the body portion against the bottom of the first recessed portion.

3. The battery cell according to claim 2, **characterized in that** the body portion is an elastomer, a ratio of a compression amount of the body portion in a state pressed and held by the second sealing member to a thickness of the body portion in a natural state being greater than or equal to 0.1 and less than or equal to 0.5 in the axial direction.

4. The battery cell according to claim 2, **characterized in that** an end face of the second sealing member facing the body portion is provided with a second recessed portion and an annular pressing surface surrounding the second recessed portion, a projection of the annular pressing surface along the axial direction at least partially surrounding a periphery of the liquid injection hole, and the second sealing member pressing and holding the body portion through the annular pressing surface.

5. The battery cell according to claim 4, **characterized in that** a projection of the annular pressing surface along the axial direction is entirely located at the periphery of the liquid injection hole.

6. The battery cell according to claim 4, **characterized in that** the bottom of the second recessed portion and the annular pressing surface have a height difference in the axial direction, the height difference being greater than a compression amount of the body portion in a state pressed and held by the second sealing member.

7. The battery cell according to claim 6, **characterized in that** a difference between the height difference and the compression amount is greater than or equal to 0.05 mm.

8. The battery cell according to claim 4, **characterized in that** a radial dimension of an outer ring edge of the annular pressing surface is greater than or equal to a radial dimension of an outer peripheral surface of the body portion in the radial direction.

9. The battery cell according to claim 4, **characterized in that** a difference between a radial dimension of an inner ring edge of the annular pressing surface and a radial dimension of an outer peripheral surface of the body portion is greater than or equal to 1 mm in the radial direction.

10. The battery cell according to claim 4, **characterized in that** a side of the body portion facing away from the liquid injection hole is provided with a third recessed portion, a projection of the third recessed portion along the axial direction falling within the liquid injection hole.

11. The battery cell according to claim 10, **characterized in that** the side of the body portion facing away from the liquid injection hole is provided with a protruding portion located at a periphery of the third recessed portion, an inner end face of the second sealing member facing the body portion is further provided with a fourth recessed portion located at the bottom of the second recessed portion, and the fourth recessed portion is configured to avoid the protruding portion.

12. The battery cell according to claim 2, **characterized in that** the first sealing member further comprises an insertion portion, one end of the insertion portion being connected to the body portion and inserted into the liquid injection hole.

13. The battery cell according to claim 12, **characterized in that** the insertion portion is an elastomer, an outer peripheral surface of the insertion portion and a wall of the liquid injection hole being sealed to each other in a tight fit manner.

14. The battery cell according to claim 13, **characterized in that** a difference between a radial dimension of an outer peripheral surface of the insertion portion in a natural state and the radial dimension of the liquid injection hole is greater than or equal to 0.2 mm and less than or equal to 0.8 mm in the radial direction.

15. The battery cell according to claim 12, **characterized in that** the first sealing member further comprises a locking portion, the locking portion being connected to an opposite end of the insertion portion away from the body portion, an outer peripheral surface of the locking portion protruding beyond an outer peripheral surface of the insertion portion in the radial direction, and the locking portion being configured to abut a side of the electrode terminal facing the interior of the housing when the insertion portion is inserted into the liquid injection hole.

16. The battery cell according to claim 15, **characterized in that** the insertion portion and the locking portion are elastomers, a difference between a maximum radial dimension of the outer peripheral surface of the locking portion and a radial dimension of the outer peripheral surface of the insertion portion being greater than or equal to 0.1 mm in a natural state.

17. The battery cell according to claim 15, **characterized in that** a thickness of the locking portion is greater than or equal to 0.5 mm in the axial direction.

18. The battery cell according to claim 15, **characterized in that** an end of the locking portion away from the insertion portion is provided with a guide surface, the guide surface being configured to guide the locking portion through the liquid injection hole.

19. The battery cell according to claim 18, **characterized in that** on a reference cross-section set along the axial direction, an inclination angle of the guide surface relative to the axial direction is greater than or equal to 30° and less than or equal to 60°.

20. The battery cell according to any one of claims 1 to 19, **characterized in that** the battery cell further comprises a current collecting disc and an electrode assembly disposed inside the housing, the current collecting disc being configured to connect a tab of the electrode assembly and the electrode terminal, and a region of the electrode terminal corresponding to the bottom of the first recessed portion is welded to the current collecting disc.

21. The battery cell according to claim 20, **characterized in that** the housing comprises a shell and an end cap, one end of the shell having an opening, the end cap covering the opening, the shell comprising a side wall and a bottom wall, the side wall surrounding an outer side of the electrode assembly, the bottom wall being disposed opposite to the opening, and the wall portion being the end cap or the bottom wall.

22. A battery **characterized by** comprising the battery cell according to any one of claims 1 to 21.

23. An electric apparatus **characterized by** comprising the battery according to claim 22.
